# EUROPÄISCHE PATENTSCHRIFT

(11) **EP 0 871 898 B1**
(45) Veröffentlichungstag und Bekanntmachung des Hinweises auf die Patenterteilung: **22.09.1999**
(21) Anmeldenummer: 96942350.8
(22) Anmeldetag: 05.12.1996
(51) Int. Cl.: G01S 13/93

(54) **VERFAHREN ZUR SIGNALVERARBEITUNG BEI EINER KRAFTFAHRZEUG-RADARANORDNUNG UND RADARANORDNUNG HIERFÜR**
SIGNAL PROCESSING METHOD IN A MOTOR VEHICLE RADAR SYSTEM AND RADAR SYSTEM THEREFOR
PROCEDE DE TRAITEMENT DE SIGNAUX DANS UN SYSTEME RADAR POUR AUTOMOBILE ET SYSTEME RADAR APPROPRIE

(30) Priorität: 03.01.1996 DE 19600059
(43) Veröffentlichungstag der Anmeldung: 21.10.1998
(73) Patentinhaber: DaimlerChrysler AG, 70567 Stuttgart (DE)
(72) Erfinder: WANIELIK, Gerd, D-89079 Ulm (DE); SCHNEIDER, Robert, D-89233 Neu-Ulm (DE)
(86) Internationale Anmeldenummer: EP9605424
(87) Internationale Veröffentlichungsnummer: WO9725629

(56) Entgegenhaltungen:
- EP-A- 0 408 237
- INTERNATIONAL RADAR CONFERENCE, ALEXANDRIA, MAY 8 - 11, 1995, 8.Mai 1995, INSTITUTE OF ELECTRICAL AND ELECTRONICS ENGINEERS, Seiten 380-385, XP000529130 ERIKSSON L H ET AL: "A HIGH PERFORMANCE AUTOMOTIVE RADAR FOR AUTOMATIC AICC"
- PROCEEDINGS OF THE INTERNATIONAL CONFERENCE ON SYSTEMS ENGINEERING, FAIRBORN, AUG. 1 - 3, 1991, Nr. CONF. 3, 1.August 1991, INSTITUTE OF ELECTRICAL AND ELECTRONICS ENGINEERS, Seiten 6-12, XP000302895 NOVAK L M: "A COMPARISON OF 1-D AND 2-D ALGORITHMS FOR RADAR TARGET CLASSIFICATION*"

## Beschreibung

Die Erfindung betrifft ein Verfahren zur Signalverarbeitung bei einer Kraftfahrzeug-Radaranordnung sowie eine Radaranordnung hierfür.

Radaranordnungen in Kraftfahrzeugen sind an sich seit langem bekannt. Bei den bekannten Radaranordnungen werden die Echosignale insbesondere zur Ermittlung des Abstandes und der Geschwindigkeit zu einem in Fahrtrichtung befindlichen Objekt, z.B. einem vorausfahrenden Fahrzeug oder einem Hindernis herangezogen. Andere Kfz-Radaranordnungen sind mit Beobachtungsrichtung schräg oder quer zur Fahrtrichtung für die Ermittlung des Fahrbahnrands eingesetzt.

Aus der US 4 053 026 ist beispielsweise eine Radaranordnung für ein Kraftfahrzeug bekannt, bei welcher bei Feststellung einer Gefahrensituation durch eine logische Schaltung automatisch ein Bremsvorgang eingeleitet wird.

In Spektrum der Wissenschaft, Juni 1990 S. 25-34 ist die Abstandsregelung mit Radar in Kraftfahrzeugen beschrieben.

In dem Artikel "A High Performance Radar for Automatic AICC" im Rahmen der INTERNATIONAL RADAR CONFERENCE, ALEXANDRIA, MAY 1995 wird eine Radar-Einrichtung zur Erfassung von Fahrzeugen und anderen Objekten aus einem Fahrzeug beschrieben. Die dabei verwendete Antenne hat einen vertikalen Öffnungswinkel von 6 Grad, so daß auch Signale, die über Reflexion des Sendesignals an der Fahrbahnoberfläche und dem Zielobjekt entstehen, erfaßt werden.

Der vorliegenden Erfindung liegt die Aufgabe zugrunde, ein Signalverarbeitungsverfahren für eine Kfz-Radaranordnung anzugeben, welches erweiterte Verkehrsinformationen liefert, sowie eine Radaranordnung hierfür.

Die Erfindung ist im Patentanspruch 1 beschreiben. Die Unteransprüche enthalten vorteilhafte Ausgestaltungen und Weiterbildungen der Erfindung.

Die Erfindung ist insbesondere vorteilhaft zur vorausschauenden Überwachung des Verkehrsflusses (Abstände zwischen vorausfahrenden Fahrzeugen, Veränderungen durch Bremsen oder Beschleunigen, Geschwindigkeiten) sowie zur Klassifikation vorausfahrender Fahrzeuge, des Straßenrandes und von Hindernissen.

Im Gegensatz zu dem eingangs genannten Stand der Technik, in welchem umgelenkte Signalwege mit Reflexionen an Wänden, Boden etc. als nachteilig und verwirrend erwähnt sind, werden solche Signalumlenkungen bei der vorliegenden Erfindung gezielt und vorteilhaft ausgewertet.

Die Erfindung ist nachfolgend anhand von Beispielen unter Bezugnahme auf die Abbildungen noch eingehend veranschaulicht. Dabei zeigt
- FIG. 1: eine Situation mit mehreren Fahrzeugen
- FIG. 2: ein mittels der Erfindung gewinnbares Bild einer Verkehrssituation
- FIG. 3: ein Bild zu einer anderen Verkehrssituation

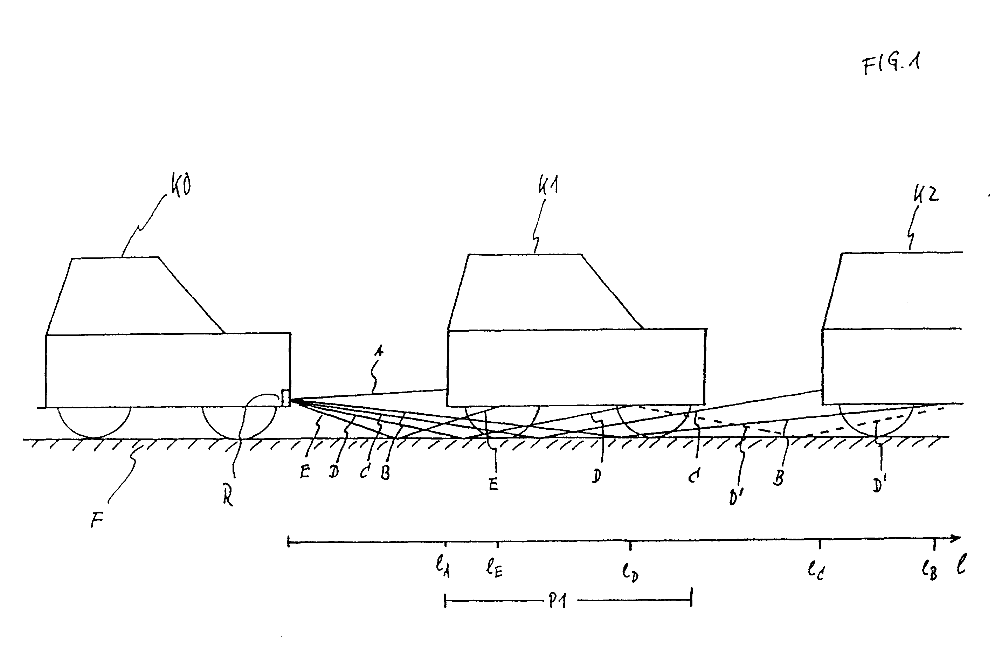

Bei der in FIG. 1 skizzierten Situation sei angenommen, daß Kraftfahrzeuge K0, K1, K2 beabstandet hintereinander fahren. K1 sei mit einer Radaranordnung R ausgestattet, deren Überwachungsbereich in Fahrtrichtung liegt und in der Horizontalen (Azimut) einen Raumwinkel WA von beispielsweise 30 Grad abdecke. Für die vertikale Erstreckung des Überwachungsbereichs ist gemäß der Erfindung wesentlich, daß Sende-Empfangsrichtungen auch in ausreichendem Maße in Richtung der Straße zeigen. Mehrere bidirektionale Signalwege sind in der Abbildung als Strahllinien A, B, C, D, E eingezeichnet.

Der Signalweg A repräsentiert den für ein Abstandswarnradar wesentlichen und typischen Verlauf. Die aus diesem Signalweg resultierenden Echosignale zeigen eine Laufzeit entsprechend einem Zielabstand l_{A} des Fahrzeugs K1 von der Radaranordnung R. Der Signallaufweg ist gleich 2l_{A}.

Für die Signalwege nach den in Richtung zur Fahrbahn F gerichteten Strahlengängen B, C, D und E sei ohne Beschränkung der Allgemeinheit im wesentlichen spiegelnde Umlenkung an einer ebenen Fahrbahn F zwischen Radaranordnungen und reflektierendem Objekt angenommen.

Der Strahl B trifft nicht mehr das Heck des Ko unmittelbar vorausfahrenden Fahrzeugs K1 sondern trifft auf die Fahrbahn und wird so durch Spiegelung nach oben gerichtet unter dem Fahrzeug K1 durchgeleitet und trifft im Abstand l_{B} von der Radaranordnung auf den Unterboden des Fahrzeugs K2. Dort reflektierte Echosignale können auf demselben Weg B in entgegengesetzter Ausbreitungsrichtung zur Radaranordnung R zurückgelangen. In analoger Weise gelangen Signale auf dem Weg C zum Heck von K2 und zurück.

Die Signale auf den Pfaden D und E werden bereits am Unterboden des Fahrzeugs K1 teilweise reflektiert.

Wegen der flachen Einfallswinkel können die Signallauflängen auf den umgelenkten Signalwegen B, C, D, E mit vernachlässigbarem Fehler den horizontalen Entfernungen nach der Abstandsskala l gleichgesetzt werden. In der Radaranordnung werden somit gemäß der Erfindung innerhalb einer Radarperiode zeitlich nach den Signalen von Weg A, welche die geringste Laufzeit entsprechend einen Zielabstand l_{A} aufweisen, Echosignale mit größerer Laufzeit empfangen und ausgewertet. Dabei zeigt sich von Signalweg A über E und D einschließlich Zwischenwerten eine im wesentlichen kontinuierlich zunehmende Zielentfernung bis (l_{A} + D1), solange eine Reflexion aus Unterboden von k1 erfolgt. Der nur knapp unter K1 durchführende Signalweg C zeigt demgegenüber dann einen deutlichen Sprung in der Laufzeit auf und leitet wiederum einen Abschnitt mit im wesentlichen kontinuierlich zunehmender Zielentfernung, solange eine Reflexion an K2 stattfindet, ein. Neben den mit durchgezogenen Linien eingezeichneten Signalwegen sind auch Signalwege mit Mehrfachumlenkung von Bedeutung. Dies ist angedeutet für einen Signalweg von der Radaranordnung R auf dem Weg D zur Fahrbahn und zum Unterboden vom Fahrzeug K1. Dort wird ein Teil der Leistung zur Radaranordnung zurückreflektiert, ein anderer Teil der Leistung aber auf dem Signalweg D' wieder zur Fahrbahn F und dort zum Fahrzeug K2 umgelenkt. Der Signalweg D + D' liefert somit einen Echosignalbeitrag von K2. Andere Mehrfachumlenkungen sind möglich. Aufgrund des flachen Winkels zwischen Ausbreitungsweg und Fahrbahn ist der Signalweg im einzelnen für die Auswertung von untergeordneter Bedeutung.

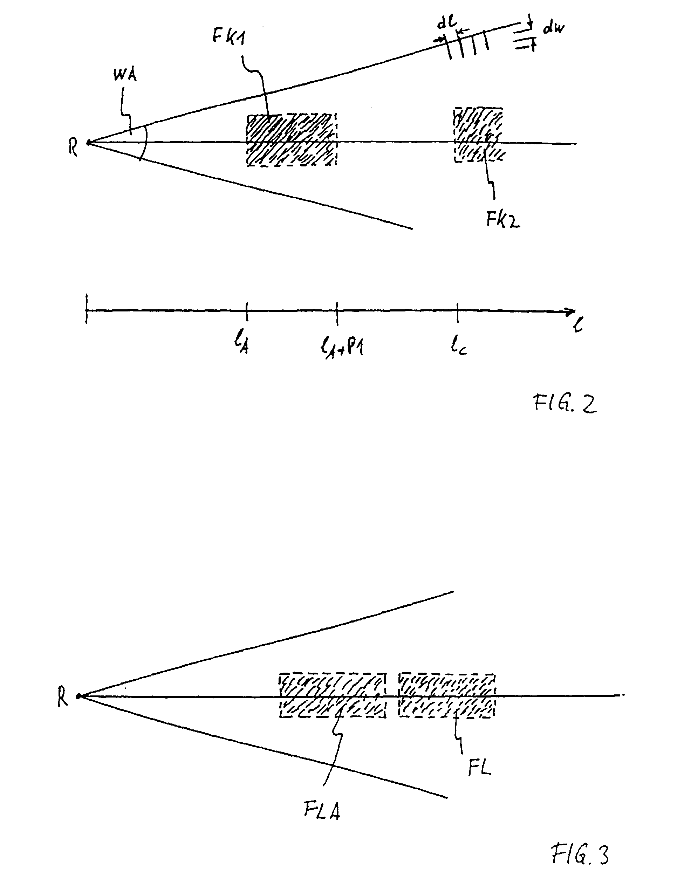

Die FIG. 2 zeigt für die Situation nach FIG. 1 eine Darstellung der Zielmeldungen in einer radartypischen Azimut-Entfernungsdarstellung, wobei eine azimutale Winkelauflösung von beispielsweise ≤1 Grad je Winkelsegment dw und eine Entfernungsauflösung von dl ≤1m angenommen ist. Die Auflösung in Elevation ist von geringerer Bedeutung für die Funktion der Erfindung und kann gegebenenfalls verringert werden (beispielsweise 3°). Eine elevationale Winkelauflösung kann vorgesehen sein, ist aber für die grundlegende Funktion der Erfindung nicht zwingend erforderlich.

Die Zielmeldungen bilden Flächen FK1, FK2, die im Umriß im wesentlichen mit den Unterbodenflächen der vorausfahrenden Fahrzeuge K1 und K2 und in der Lage mit deren Abstand von der Radaranordnung R übereinstimmen.

Die Auswertung der Echosignale nach der Erfindung ermöglicht somit eine Bestimmung der Parameter dieser Flächen, insbesondere der Fahrzeuglänge und/oder den gegenseitigen Abstand vorausfahrender Fahrzeuge aus den Lücken aufeinanderfolgender Flächen. Dies wiederum ermöglicht beispielsweise die Unterscheidung, ob Signale mit längerer Laufzeit von einem Fahrzeug oder einem anderen Objekt stammen. Aus den Flächenparametern z.B. Länge, Breite, Form, gegenseitiger Flächenabstand kann eine Zielklassifikation nach Fahrzeugtypen vorgenommen werden, insbesondere eine Unterscheidung nach Motorrad, Personen-Kfz und Lastkraftwagen verschiedener Größe und/oder nach Fahrzeugen mit und ohne Anhänger. Die Auswertung kann sich allein auf die Fahrzeuglänge stützen oder eine flächige Auswertung nach Art einer Bildanalyse einschließen. Verfahren zur Bildanalyse und Objektklassifikation, die für die Anwendung auf die vorliegende Erfindung anpaßbar sind, sind prinzipiell bekannt und daher an dieser Stelle nicht weiter ausgeführt. Aus der Veränderung von Abständen zwischen vorausfahrenden Fahrzeugen kann eine Aussage über Brems- oder Beschleunigungssituationen abgeleitet werden. Mittels einer Doppler-Auswertung der Echosignale können zusätzlich Geschwindigkeiten vorausfahrender Fahrzeuge bestimmt werden. Aus der Doppleranalyse können außerdem Informationen über die Zusammengehörigkeit von Objektreflexionen abgeleitet werden.

FIG. 3 zeigt eine Azimuth-Entfernungs-Darstellung mit Zielflächen FL, FLA für eine Situation mit einem vorausfahrenden Lastwagen mit Anhänger.

Die Erfindung ist besonders vorteilhaft für den sogenannten Konvoi-Leitverkehr. Günstig ist auch die Möglichkeit, aus dem gegenseitigen Abstand vorausfahrender Fahrzeuge und evtl. dessen zeitlicher Veränderung Folgerungen für das eigene Fahrverhalten, insbesondere unter Sicherheitsgesichtspunkten, abzuleiten.

Eine Winkelauflösung der Radaranordnung in vertikaler Richtung ist möglich, für die Auswertung wie vorstehend geschildert aber nicht zwingend nötig. Eine zusätzliche Erkennung der Signalumlenkung an der Fahrbahn durch vertikale Winkeldiskriminierung kann die Unterscheidung von direkt beobachteten Zielen und durch Fahrbahnspiegelung beobachteten Zielen unterstützen.

Geeignete Radaranordnungen für Einsatz bei der Erfindung sind an sich bekannt. Insbesondere sind auch gängige Abstandswarnradaranordnungen mit geringem Änderungsaufwand umrüstbar. Die Radaranordnung ist vorzugsweise als Pulsradaranordnung oder als FMCW-Radaranordnung insbesondere mit der Fähigkeit zur Dopplerverarbeitung von Echosignalen ausgeführt. Wesentlich bei der Radaranordnung gegenüber bekannten Anordnungen ist, daß die Empfangseinrichtungen der Radaranordnung innerhalb einer Radarperiode nicht nur das Echosignal mit der kürzesten Echolaufzeit, sondern auch danach eintreffende Echosignale aufnehmen und auswerten, und daß die Antennenanordnung einen zur Fahrbahn gerichteten Siganlausbreitungsweg mit einschließt. Die zur Fahrbahn gerichteten Signalwege sollen insbesondere in einem Winkelbereich zwischen 0 - 10 Grad von der Horizontalen aus liegen. Der gesamte elevational überwachte Raumwinkelbereich erstreckt sich vorteilhafterweise von z.B. +10 bis -10 Grad, bezogen auf die Horizontale. Die Entfernungsauflösung ist vorzugsweise < 1m. Die Montagehöhe der Radaranordnung R über der Fahrbahn F ist vorteilhafterweise < 1m. Die Auswertung ist mit Mitteln der digitalen Signalverarbeitung dem Fachmannn auf der Grundlage der vorstehend gegebenen Ausführungen möglich, insbesondere unter Einsatz programmierbarer Prozessoren mit Peripheriebausteinen.

## Patentansprüche

1. Verfahren zur Signalverarbeitung bei einer Kraftfahrzeug-Radaranordnung, bei dem Echosignale ausgewertet werden, welche einem Signalweg mit Umlenkung an der Fahrbahnoberfläche zwischen Radaranordnung und reflektierendem Ziel entsprechen, dadurch gekennzeichnet, daß Signalabstrahlung und/oder Signalempfang selektiv in bzw. aus Richtung zur Fahrbahn vorgenommen werden.

2. Verfahren nach Anspruch 1, dadurch gekennzeichnet, daß innerhalb eines Raumwinkelbereichs, der eine Richtung zur Fahrbahn umfaßt, auch Echosignale mit längerer Laufzeit als das Echosignal mit der kürzesten Laufzeit ausgewertet werden.

3. Verfahren nach einem der Ansprüche 1 bis 2, dadurch gekennzeichnet, daß die Echosignale einer Klassifikation mit wenigstens einer Fahrzeugklasse unterzogen werden.

4. Verfahren nach einem der Ansprüche 1 bis 3, dadurch gekennzeichnet, daß die Echosignale einem Bildanalyseverfahren unterzogen werden.

5. Verfahren nach Anspruch 3 oder 4, dadurch gekennzeichnet, daß die Fahrzeuglänge und/oder dir Fahrzeugfläche als ein Klassifikationsmerkmal ausgewertet wird.

6. Verfahren nach einem der Ansprüche 3 bis 5, dadurch gekennzeichnet, daß die Ausrichtung der Fahrzeuge auf der Fahrbahn erfaßt wird.

7. Verfahren nach einem der Ansprüche 1 bis 6, dadurch gekennzeichnet, daß der Abstand zwischen in Beobachtungsrichtung befindlichen Fahrzeugen und/oder deren Geschwindigkeiten ermittelt werden.

8. Verfahren nach einem der Ansprüche 1 bis 7, dadurch gekennzeichnet, daß der Beobachtungsbereich für die Auswertung der Echosignale aus Signalwegen mit Umlenkung an der Fahrbahnoberfläche auf einen azimutalen und/oder elevationalen Ausschnittwinkel in Fahrtrichtung reduziert wird.

## Claims

1. Method of signal processing in a motor vehicle radar arrangement, in which echo signals are evaluated, which correspond with a signal path with deflection at the travel path surface between radar arrangement and reflecting target, and characterised in that signal radiation and/or signal reception are selectively undertaken in or out of direction towards the travel path.

2. Method according to claim 1, characterised in that also echo signals with longer transit time than the echo signal with the shortest transit time are evaluated within a spatial angular range which comprises a direction towards the travel path.

3. Method according to one of claims 1 to 2, characterised in that the echo signals are subjected to a classification with at least one class of vehicle.

4. Method according to one of claims 1 to 3, characterised in that the echo signals are subjected to an image analysis process.

5. Method according to claim 3 or 4, characterised in that the vehicle length and/or the motor vehicle area is or are evaluated as a classification feature.

6. Method according to one of claims 3 to 5, characterised in that the orientation of the vehicle on the travel path is detected.

7. Method according to one of claims 1 to 6, characterised in that the spacing between vehicles disposed in observation direction and/or the speeds thereof is or are ascertained.

8. Method according to one of claims 1 to 7, characterised in that the observation range for the evaluation of the echo signals from signal paths with deflection at the travel path surface is reduced to an azimuthal and/or elevational aperture angle in travel direction.

## Revendications

1. Procédé de traitement de signaux dans un système radar de véhicule automobile, dans lequel on évalue des signaux d'écho qui correspondent à un parcours de signal avec renvoi sur la surface de la chaussée entre le système radar et la cible réfléchissante, caractérisé en ce que l'on procède à l'émission de signaux et/ou à la réception de signaux de manière sélective en direction vers ou depuis la chaussée.

2. Procédé selon la revendication 1, caractérisé en ce qu'à l'intérieur d'une plage d'angle solide qui comprend une direction vers la chaussée, on peut également évaluer des signaux d'écho avec un temps de parcours plus long que le signal d'écho avec le temps de parcours le plus court.

3. Procédé selon l'une ou l'autre des revendications 1 et 2, caractérisé en ce que l'on soumet les signaux d'écho à un classement avec au moins une classe de véhicule.

4. Procédé selon l'une quelconque des revendications 1 à 3, caractérisé en ce que l'on soumet les signaux d'écho à un procédé d'analyse d'image.

5. Procédé selon l'une ou l'autre des revendications 3 et 4, caractérisé en ce que l'on évalue la longueur de véhicule et/ou la surface de véhicule comme une caractéristique pour le classement.

6. Procédé selon l'une quelconque des revendications 3 à 5, caractérisé en ce que l'on détecte l'orientation des véhicules sur la chaussée.

7. Procédé selon l'une quelconque des revendications 1 à 6, caractérisé en ce que l'on détermine l'espacement entre des véhicules situés en direction d'observation et/ou leurs vitesses.

8. Procédé selon l'une quelconque des revendications 1 à 7, caractérisé en ce que pour évaluer les signaux d'écho à partir des parcours de signal avec renvoi sur la surface de la chaussée on réduit la plage d'observation en direction de conduite à un angle partiel en azimut et/ou en élévation.
